# EUROPÄISCHE PATENTSCHRIFT

(11) **EP 1 277 991 B1**
(45) Veröffentlichungstag und Bekanntmachung des Hinweises auf die Patenterteilung: **18.02.2009**
(21) Anmeldenummer: 02012089.5
(22) Anmeldetag: 31.05.2002
(51) Int. Cl.: F16H 47/00, F16H 61/42

(54) **Hydrostatischer Antrieb und Schaltverfahren**
Hydrostatic transmission and shift control method
Transmission hydrostatique et méthode de changement de vitesses

(30) Priorität: 10.07.2001 DE 10133358
(43) Veröffentlichungstag der Anmeldung: 22.01.2003
(73) Patentinhaber: Brueninghaus Hydromatik GmbH, 89275 Elchingen (DE)
(72) Erfinder: Essig, Heinz-Gerhard, 89173 Lonsee (DE)
(74) Vertreter: Körfer, Thomas

(56) Entgegenhaltungen:
- EP-A2- 1 020 314
- EP-A2- 1 076 194
- DE-A1- 2 652 976
- DE-A1- 19 858 958
- DE-C1- 4 234 826
- DE-C1- 19 753 729

## Beschreibung

Die Erfindung betrifft einen hydrostatischen Antrieb sowie ein Verfahren zum Wechseln von Gängen eines Schaltgetriebes, das einem hydrostatischen Getriebe nachgeschaltet ist.

Hydrostatische Antriebe, welche neben einer Hydropumpe und einem über Arbeitsleitungen damit verbundenen Hydromotor ein Schaltgetriebe aufweisen, sind bekannt. Ein solcher hydrostatischer Antrieb ist beispielsweise in der DE 195 24 189 C2 beschrieben. Der beschriebene hydrostatische Antrieb umfaßt neben einer Antriebsmaschine, durch welche eine Hydropumpe angetrieben wird, einen Hydromotor sowie ein dem Hydromotor nachgeschaltetes Schaltgetriebe. Der Hydromotor weist eine Schräg- oder Taumelscheibe auf, welche aus einer Neutralstellung in zwei Richtungen verschwenkbar ist, wobei die Schräg- oder Taumelscheibe durch eine Verstelleinrichtung betätigt wird, die von einer elektronischen Steuereinheit ansteuerbar ist.

Wird von der elektronischen Steuereinheit ein Schaltkriterium erkannt, so wird die Schräg- oder Taumelscheibe des Hydromotors in Neutralstellung geschwenkt und anschließend der eingelegte Gang des Schaltgetriebes ausgerückt. Über jeweils einen Drehzahlsensor an der Eingangs- bzw. Ausgangswelle des Schaltgetriebes werden die aktuellen Ist-Drehzahlen der Wellen erfaßt. Aufgrund dieser Drehzahlinformation wird die Schräg- oder Taumelscheibe des Hydromotors, bevor der nächste Gang eingerückt wird, so verstellt, daß das Drehzahlverhältnis der Eingangs- bzw. Ausgangswelle dem neuen Übersetzungsverhältnis entspricht. Entspricht das Drehzahlverhältnis zwischen Eingangs- und Ausgangswelle dem Übersetzungsverhältnis des einzulegenden Gangs, so wird durch das elektronische Steuergerät die Verstelleinrichtung des Hydromotors so betätigt, daß die Schräg- oder Taumelscheibe wiederum in Neutralstellung ist. An dem Schaltgetriebe wird nun der neue Gang eingerückt und anschließend die Verstellvorrichtung des Hydromotors entsprechend dem Fahrzustand eingestellt.

Der beschriebene hydrostatische Antrieb hat den Nachteil, daß zum Wechseln der Gänge des Schaltgetriebes die Anpassung der Drehzahl der Getriebe-Eingangswelle durch ein Verschwenken der Schräg- oder Taumelscheibe des Hydromotors erfolgt. Dadurch ist an der Getriebe-Eingangswelle und der Getriebe-Ausgangswelle jeweils ein Drehzahlsensor erforderlich. Neben dem Nachteil des großen Bauaufwandes ist ferner die Schaltzeit relativ lang, da die Schräg- oder Taumelscheibe mehrfach verstellt werden muß, bevor der Schaltvorgang beendet ist.

Hydrostatische Antriebe der beschriebenen Bauart werden vorzugsweise bei Arbeitsmaschinen, wie beispielsweise Traktoren, eingesetzt. Die relativ lange Zugkraftunterbrechung beim Stand der Technik hat dabei zur Folge, daß das Fahrzeug, insbesondere in beladenem Zustand, bei Bergauffahrt deutlich an Geschwindigkeit verliert. Im Extremfall kann dies dazu führen, daß bei abgeschlossenem Schaltvorgang bereits das Schaltkriterium zum Zurückschalten erreicht ist.

Ferner wird durch das Verschwenken der Schräg- oder Taumelscheibe des Hydromotors in Neutralstellung die Abtriebswelle des Hydromotors aufgrund des Schleppmoments nicht vollständig drehmomentenfrei, wodurch es beim Einlegen des nächsten Ganges zu einem Schaltruck kommt.

Die deutsche Patentschrift DE 42 34 826 C1 beschreibt ein hydrostatisches Getriebe mit wenigstens einer Hydropumpe und wenigstens einem verstellbaren Hydromotor, der an zwei Arbeitsleitungen angeschlossen ist, von denen wenigstens eine zur Hydropumpe führt. Das Getriebe umfasst eine zwischen zwei Verstellbereichsgrenzen verstellbaren Stelleinrichtung zur Einstellung des Verdrängungsvolumens des Hydromotors, wobei die Verstellbereichsgrenzen der Einstellung des Hydromotors auf ein minimales und auf ein maximales Verdrängungsvolumen entsprechen. Um die mit dem hydrostatischen Getriebe erzielbare Bremswirkung an unterscniedliche Einsatzbedingungen anpassen zu können, ist eine mit einem Stellsignal ansteuerbare Positioniereinrichtung zum Verstellen wenigstens einer der Verstellbereichsgrenzen und eine Steuereinrichtung zur Einstellung des Stellsignals im Schubbetrieb des hydrostatischen Getriebes vorgesehen, wobei für eine Erhöhung der Bremswirkung die Positioniereinrichtung die verstellbare Verstellbereichsgrenze in Richtung Vergrößerung des Verdrängungsvolumens des Hydromotors verstellt.

Aus der deutschen Patentschrift DE 197 53 729 C1 ist ein Fahrantrieb mit einem Antriebsmotor bekannt, welcher eine Speisepumpe und eine hydrostatische Verstellpumpe antreibt. Der Fahrantrieb umfasst einen hydrostatischen und nullschwenkbaren Verstellmotor, welcher mit der hydrostatischen Verstellpumpe einen hydrostatischen Kreislauf bildet sowie ein hydrostatisch angetriebenes 2-Gang-Getriebe, welches dann geschaltet wird, wenn das zu übertragende Drehmoment minimal ist und der hydrostatische Verstellmotor auf Schluckvolumen Null steht.

Die europäische Patentanmeldung EP 1 020 314 A2 beschreibt einen Antriebsstrang für Fahrzeuge. Der Antriebsstrang umfasst dabei eine Verbrennungskraftmaschine, ein mittels einer elektronischen Steuereinheit und mittels Betätigungseinrichtungen schaltbares kupplungsloses Getriebe ohne mechanische Synchronisationseinrichtung und ein hydrostatisches Getriebe mit einer Hydropumpe und einem Hydromotor, welche in einem geschlossenen Kreis verbunden sind, wobei die Drehzahl des Hydromotors in Abhängigkeit von einem Steuersignal zur Verstelleinrichtung von Hydropumpe und/oder zur Verstelleinrichtung von Hydromotor steuerbar ist.

Der Erfindung liegt die Aufgabe zugrunde, einen hydrostatischen Antrieb und ein Verfahren zu dessen Betätigung zu schaffen, bei dem eine sehr kurze Zugkraftunterbrechung durch den Schaltvorgang entsteht und der Schaltruck gleichzeitig reduziert ist.

Die Aufgabe wird durch den erfindungsgemäßen hydrostatischen Antrieb nach Anspruch 1 sowie das erfindungsgemäße Verfahren zum Wechseln von Gängen des Schaltgetriebes nach Anspruch 9 gelöst.

Der erfindungsgemäße hydrostatische Antrieb sowie das erfindungsgemäße Verfahren zum Wechseln von Gängen eines Schaltgetriebes haben den Vorteil, daß durch das Einstellen eines von Null verschiedenen minimalen Schwenkwinkels des Hydromotors die Abtriebswelle des Hydromotors tatsächlich drehmomentenfrei ist. Der minimale Schwenkwinkel ist dabei so eingestellt, daß das Schleppmoment des Hydromotors gerade kompensiert wird. Der eigentliche Gangwechsel des Schaltgetriebes kann dadurch lastfrei durchgeführt werden. Der Angleich der Drehzahlen der Getriebe-Eingangs- und -Ausgangswelle an das neue Übersetzungsverhältnis kann damit ausschließlich mittels der internen Synchronisationsvorrichtung des Schaltgetriebes erfolgen.

Damit kann das mehrmalige Verschwenken der Schräg- oder Taumelscheibe des Hydromotors entfallen, wodurch sich die Schaltzeit deutlich verringern läßt. Zudem entfällt die Notwendigkeit, einen aus ihrer Neutralstellung in beide Richtungen verschwenkbaren Hydromotor zu verwenden.

Durch die in den Unteransprüchen aufgeführten Maßnahmen sind vorteilhafte Weiterbildungen des erfindungsgemäßen hydrostatischen Antriebs sowie des Verfahrens zum Wechseln von Gängen eines Schaltgetriebes möglich.

Besonders vorteilhaft ist dabei die Verwendung eines Planetengetriebes als Schaltgetriebe, bei dem der Wechsel von Gangstufen durch das Öffnen und Schließen reibschlüssiger Kupplungen erfolgt. Das Anpassen der Eingangswellen-Drehzahl erfolgt somit in einfacher Weise durch das Schließen einer reibschlüssigen Lamellenkupplung des einzulegenden Gangs.

Anhand der Zeichnungen werden der erfindungsgemäße hydrostatische Antrieb sowie das Verfahren zum Wechseln von Gängen eines nachgeschalteten Schaltgetriebes in der nachfolgenden Beschreibung näher erläutert. Es zeigen:
- Fig. 1: eine schematische Darstellung eines erfindungsgemäßen hydrostatischen Antriebs;
- Fig. 2: ein Ausführungsbeispiel der Beschaltung einer Hydropumpe eines erfindungsgemäßen hydrostatischen Antriebs;
- Fig. 3: ein Ausführungsbeispiel der Beschaltung eines Hydromotors eines erfindungsgemäßen hydrostatischen Antriebs;
- Fig. 4: ein Ausführungsbeispiel eines Planetengetriebes für einen erfindungsgemäßen hydrostatischen Antrieb;
- Fig. 5: ein Fahrdiagramm für einen erfindungsgemäßen hydrostatischen Antrieb mit einem zweistufigen Schaltgetriebe;
- Fig. 6: ein erstes Besipiel eines Zugkraftverlaufs während eines Schaltvorgangs; und
- Fig. 7: ein zweites Beispiel eines Zugkraftverlaufs während eines Schaltvorganges.

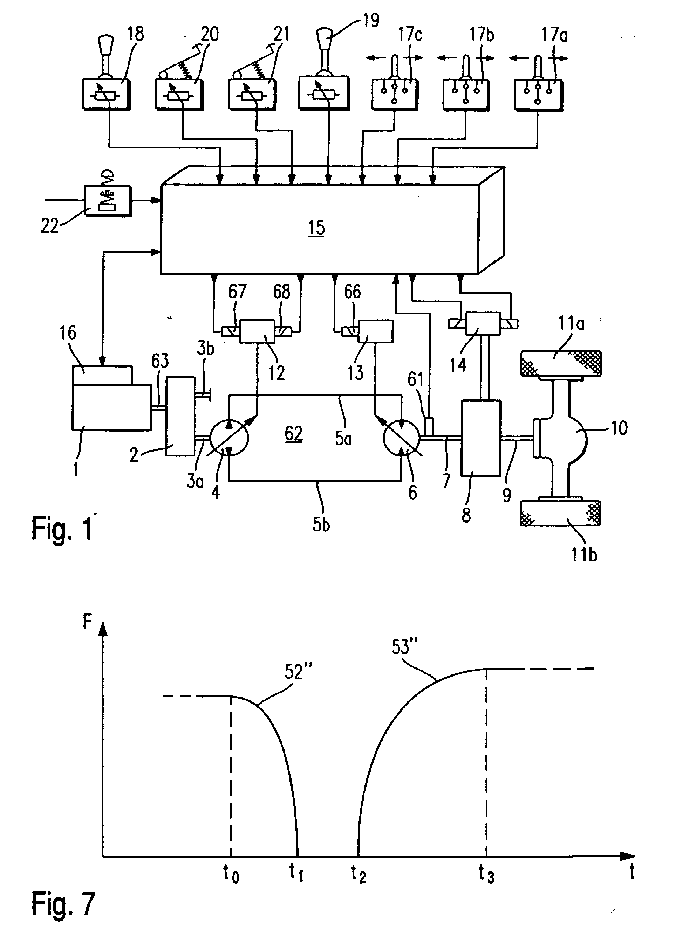

Ein Ausführungsbeispiel eines erfindungsgemäßen hydrostatischen Antriebs ist in Fig. 1 dargestellt. Ein Antriebsmotor 1 ist im Ausführungsbeispiel über eine Welle 63 mit einem Verteilergetriebe 2 verbunden. Das Verteilergetriebe 2 weist zumindest zwei Ausgangswellen 3a, 3b auf, von denen eine mit einer Hydropumpe 4 verbunden ist. Die Hydropumpe 4 ist verstellbar und für eine Förderung eines Druckmittels in beide Richtungen ausgelegt. Über Arbeitsleitungen 5 ist die Hydropumpe 4 mit einem Hydromotor 6 verbunden. Der ebenfalls verstellbare Hydromotor 6 ist über eine Abtriebswelle 7 mit einem Schaltgetriebe 8 verbunden. Ausgangsseitig ist das Schaltgetriebe 8 über eine Welle 9 mit z.B. einem Differential 10 verbunden. Über das Differential 10 werden beispielsweise über zwei Halbachsen die Räder 11a, 11b eines nicht weiter dargestellten Fahrzeugs angetrieben. Zum Einstellen des Fördervolumens der Hydropumpe 4 ist eine Verstelleinrichtung 12 vorgesehen, welche im Ausführungsbeispiel elektromagnetisch zu betätigen ist. Über eine weitere, ebenfalls durch Elektromagnete 67, 68 elektromagnetisch betätigbare Verstellvorrichtung 13, wird der Schwenkwinkel und so letztlich das Schluckvolumen des Hydromotors 6 eingestellt. Zum Wechseln des eingelegten Gangs, und damit des Übersetzungsverhältnisses des Schaltgetriebes 8 ist eine Schaltvorrichtung 14 vorgesehen. Die Schaltvorrichtung 14 ist ebenfalls elektromagnetisch betätigbar, wobei die Elektromagneten der Schaltvorrichtung 14 sowie die Elektromagneten der Verstelleinrichtungen 12 und 13 durch ein elektronisches Steuergerät 5 angesteuert werden. Neben den Signalen zur Betätigung der Verstellvorrichtungen 12 und 13 sowie der Schaltvorrichtung 14 übernimmt das elektronische Steuergerät 15 ebenfalls die Ansteuerung einer Einspritzpumpe 16, bei Verwendung einer Brennkraftmaschine als Antriebsmotor 1. Die Verbindung zwischen dem elektronischen Steuergerät 15 und der Einspritzpumpe 16 kann beispielsweise als CAN-Bus ausgeführt sein.

Im dargestellten Ausführungsbeispiel ist das elektronische Steuergerät 15 eingangsseitig mit drei Auswahlschaltern 17a, 17b und 17c verbunden. Der erste Auswahlschalter 17a dient dabei der Bestimmung des Fahrbereichs. Damit kann der Fahrer zwei Betriebszustände festlegen, beispielsweise Straßenfahrt- oder Arbeitsbetrieb. Der zweite Auswahlschalter 17b dient der Gangvorwahl, so daß neben einem Automatikmodus sowohl die erste Fahrstufe des Schaltgetriebes 8 als auch die zweite Fahrstufe des Schaltgetriebes 8 fest vorgewählt werden kann. Der dritte Auswahlschalter 17c ist als Fahrtrichtungsschalter für Vorwärts- bzw. Rückwärtsfahrt ausgebildet.

Weiterhin ist das elektronische Steuergerät 15 eingangsseitig mit einem Handgashebel 18 und einem Handfahrhebel 19 verbunden. Befindet sich der Auswahlschalter 17a für den Fahrbereich in Stellung "Arbeitsbetrieb", so dienen der Handgashebel 18 und der Handfahrhebel 19 der Bedienung der Fahrzeugfahrt. Dabei wird mit dem Handgashebel 18 ausschließlich eine Drehzahl des Antriebsmotors 1 vorgegeben. Die Geschwindigkeit des Fahrzeugs wird durch den Handfahrhebel 19 bestimmt. Befindet sich dagegen der Wahlschalter 17a im Fahrbereich Straßenfahrt, so sind das Handgas 18 und der Handfahrhebel 19 inaktiv. Anstelle dessen wird das Fahrzeug über ein Fahrpedal 20 und ein Bremspedal 21 gesteuert. Zur Stromversorgung ist das elektronische Steuergerät 15 weiterhin an eine Fahrzeugbatterie angeschlossen, wobei die Stromzufuhr über einen Notaustaster 22 unterbrochen werden kann.

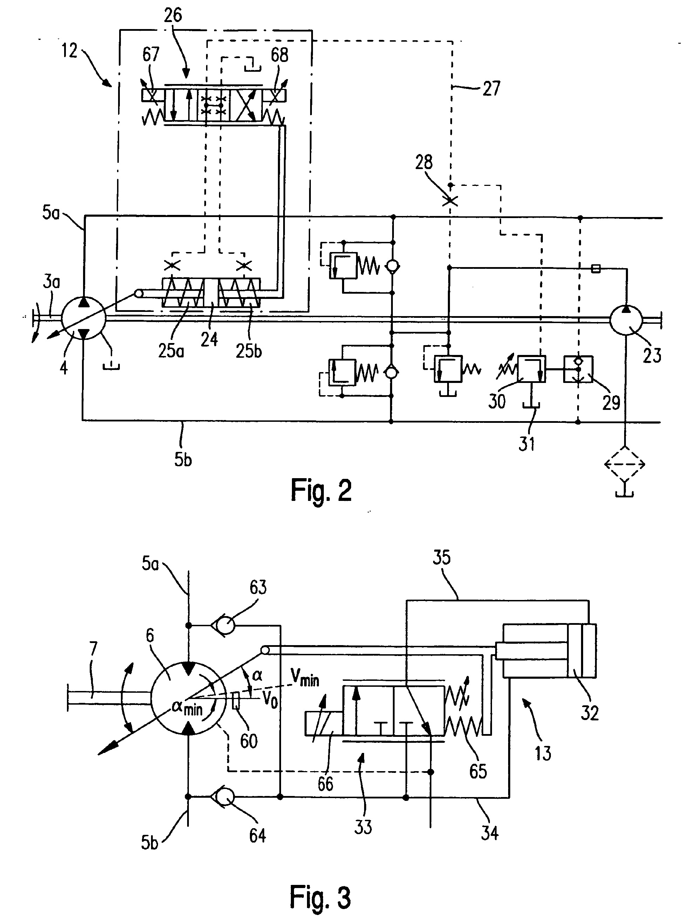

In Fig. 2 ist ein hydraulischer Schaltplan zur Beschaltung der Hydropumpe 4 dargestellt. Eine solche Beschaltung der für zwei Förderrichtungen vorgesehenen Hydropumpe 4 ist prinzipiell bekannt, weswegen lediglich die zum Verständnis der Erfindung relevanten Bauteile erläutert werden sollen. Der Schwenkwinkel der Hydropumpe 4, welche durch die Welle 3a über das Verteilergetriebe 2 von dem Antriebsmotor 1 angetrieben wird, wird durch die Verstelleinrichtung 12 verstellt. Die Verstelleinrichtung 12 besteht aus einem Verstellkolben 24, welcher durch Druckfedern in den beiden Stelldruckkammern 25a und 25b in eine Neutralstellung gebracht ist, bei der das Fördervolumen der Hydropumpe 4 Null ist. Die beiden Stelldruckkammern 25a und 25b sind über ein variables Stelldruckventil 26 wechselweise mit einem Tank oder einer Stelldruckleitung 27 verbindbar. Das Stelldruckventil 26 ist federbelastet, wobei die Federvorspannung mit der Position des Stellkolbens 24 rückgekoppelt ist. Zum Auslenken wird das Stelldruckventil 26 mittels Proportionalmagneten mit einer Kraft beaufschlagt. Zum Erzeugen eines initialen Stelldrucks in einer der Stelldruckkammern 25a oder 25b ist die Stelldruckleitung 27 über eine Drosselstelle 28 mit einer Hilfspumpe 23 verbunden. Die Hilfspumpe 23 ist für die Förderung in nur eine Richtung vorgesehen und ebenfalls über die Welle 3a angetrieben.

Die beiden Arbeitsleitungen 5a, 5b sind über ein Wechselventil 29 mit einem federvorgespannten Druckbegrenzungsventil 30 verbunden. Durch das Wechselventil 29 wirkt der jeweils höhere Druck in einer der Arbeitsleitungen 5 auf eine Meßfläche des Druckbegrenzungsventils 30. Bei zu weit ansteigendem Druck in einer der Arbeitsleitungen 5 wird durch das Druckbegrenzungsventil 30 die Stelldruckleitung 27 gegen das Tankvolumen 31 entspannt. Durch die Entspannung der Stelldruckleitung 27 in das Tankvolumen 31 sind beide Stelldruckkammern 25a sowie 25b über das Stelldruckventil 26 mit dem Tank verbunden. Dadurch entsteht in den Stelldruckkammern 25a und 25b tentenziell ein Druckgleichgewicht. Aufgrund der Druckfedern in den Stelldruckkammern 35a und 35b kehrt der Stellkolben 24 in Richtung seiner Neutralstellung zurück und die Hydropumpe 4 wird auf kleineres Fördervolumen gestellt. Diese Vorgang läuft jedoch kontinuierlich ab, so daß durch diese sogenannte Druckabschneidung 29, 30 in der förderseitigen Arbeitsleitung 5 ein konstanter maximaler Druck vorliegt.

Der in Fig. 3 dargestellte Hydromotor 6 wird je nach Förderrichtung der Hydropumpe 4 über eine der Arbeitsleitungen 5a, 5b mit Druckmittel gespeist. Zur Einstellung des Schwenkwinkels α dient die Verstelleinrichtung 13. Die Verstelleinrichtung 13 weist einen Stellkolben 32 auf, sowie ein zweites Stelldruckventil 33. Die beiden unterschiedlichen Flächen des Stellkolbens 32 werden über eine Druckleitung 34 bzw. über eine zweite Stelldruckleitung 35 mit Druck beaufschlagt. Die Stelldruckleitung 35 ist dabei über das zweite Stelldruckventil 33 entweder mit der Druckleitung 34 oder mit dem Tank zu verbinden. Zwischen diesen beiden Endpositionen arbeitet das zweite Stelldruckventil 33 kontinuierlich, wobei einer Federkraft ein Elektromagnet entgegenwirkt. Die Druckleitung 34 ist über je ein Rückschlagventil 63, 64 mit der förder- bzw. saugseitigen Arbeitsleitung 5a, 5b verbunden.

Die Position des Stellkolbens 32 und damit der eingestellte Schwenkwinkel α des Hydromotors 6 wird über eine Feder 65 zu dem zweiten Stelldruckregelventil 33 rückgekoppelt. Der der Federkraft entgegenwirkende Elektromagnet 66 wird durch das elektronische Steuergerät 15 angesteuert.

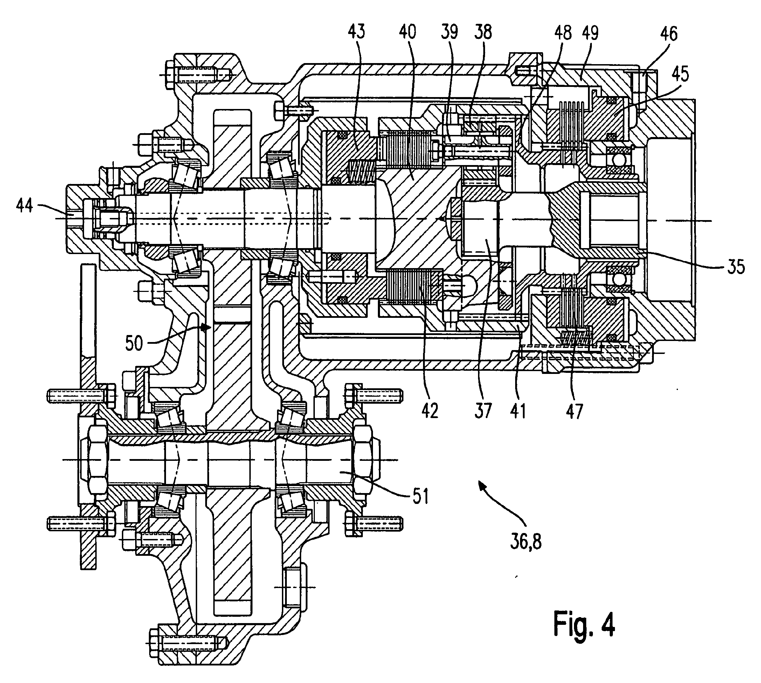

Die Abtriebswelle 7 des Hydromotors 6 ist fest mit der Eingangswelle 35 des in Fig. 4 dargestellten als Planetengetriebe 36 ausgeführten Schaltgetriebes 8 verbunden. An der Eingangswelle 35 ist ein Sonnenrad 37 angeformt. Um das Sonnenrad 37 sind mehrere Planetenräder 38 angeordnet, die jeweils über Nadellager auf Wellen 39 drehbar fixiert sind, wobei die Welle 39 in der Getriebe-Ausgangswelle 40 angeordnet sind. Die Achsen der Planetenräder 38, die sich mit dem Sonnenrad 37 im Eingriff befinden, sind damit verdrehgesichert bezüglich der Getriebe-Ausgangswelle 40 angeordnet.

Zudem befinden sich die Planetenräder 38 im Eingriff mit einem Hohlrad 41. Mittels einer ersten Lamellenkupplung 42 ist zwischen der Getriebe-Ausgangswelle 40 und dem Hohlrad 41 ein Kraftschluß herstellbar. Die einzelnen Lamellen der ersten Lamellenkupplung 42 werden hierzu durch einen ersten Stellkolben 43 in axialer Richtung mit einer Kraft beaufschlagt. Hierzu wird der erste Kolben 43 über einen ersten Anschluß 44 über die hohlgebohrte Welle 40 mit einem Druck beaufschlagt. Der erste Anschluß ist mit der in Fig. 1 dargestellten Schaltvorrichtung 14 verbunden.

Das Hohlrad 41 wird somit verdrehgesichert mit der Getriebe-Ausgangswelle 40 verbunden, so daß eine Relativbewegung der Rotationsachse der Planetenräder 38 bezüglich des Hohlrades 41 nicht möglich ist. Dadurch wird eine direkte Verbindung der Eingangswelle 35 des Schaltgetriebes 8 mit der Getriebe-Ausgangswelle 40 erreicht. Ein zweiter Stellkolben 45 ist über einen zweiten Anschluß 46 von der Schaltvorrichtung 14 mit einem Druck beaufschlagbar, so daß eine zweite Lamellenkupplung 47 in axialer Richtung mit einer Kraft beaufschlagt werden kann. Die zweite Lamellenkupplung 47 ist einerseits mit einem Kupplungskorb 48 und auf der anderen Seite mit dem Gehäuse 49 des Getriebes 36 verbunden. Der Kupplungskorb 48 ist durch Formschluß verdrehgesichert bezüglich des Hohlrads 41.

Wird die erste Lamellenkupplung 42 geöffnet und die zweite Lamellenkupplung 47 geschlossen, so wird das Hohlrad 41 fest mit dem Gehäuse 49 verbunden. Die Planetenräder 38 laufen nun in dem Hohlrad 41 um, so daß die Getriebe-Ausgangswelle 40 gegenüber der Eingangswelle 35 eine reduzierte Drehzahl aufweist.

Im dargestellten Ausführungsbeispiel eines Schaltgetriebes 8 nach Fig. 4 ist anstelle des Differential 10 aus Fig. 1 über ein Vorgelege 50 eine starre Abtriebswelle 51 mit der Getriebe-Ausgangswelle 40 verbunden.

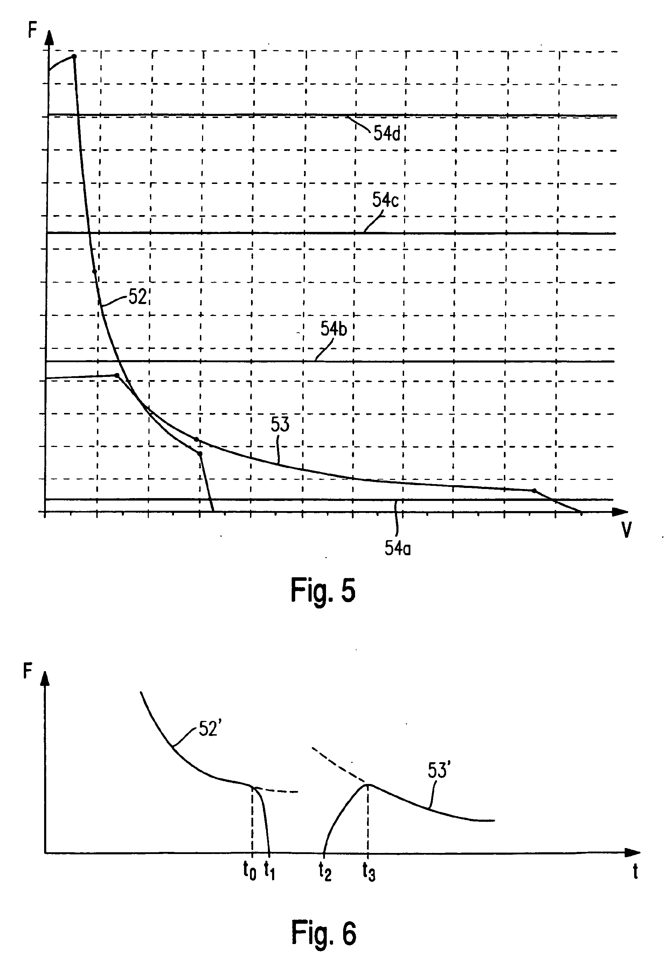

In Fig. 5 ist ein Vollast-Fahrdiagramm eines erfindungsgemäßen hydrostatischen Antriebs mit einem zweistufigen Schaltgetriebe dargestellt. Aufgetragen ist dabei die maximale Zugkraft F über der Fahrgeschwindigkeit v. Die Kurve 52 zeigt dabei einen ersten Gang und die Kurve 53 einen zweiten Gang, der als Schnellgang ausgelegt ist. Weiterhin sind in dem Diagramm vier Fahrwiderstandslinien 54a bis 54d eingezeichnet, wobei die Fahrwiderstandslinie 54a den Rollwiderstand bei minimaler Masse charakterisiert. Die Fahrwiderstandslinie 54d entspricht einer maximal befahrbaren Steigung bei voller Beladung des Fahrzeugs. Die Kurven 52 und 53 für den ersten bzw. zweiten Gang schneiden sich in einem Punkt. Vorteilhafterweise werden die Schaltkriterien so festgelegt, daß in dem einzulegenden Gang eine höhere maximale Zugkraft F möglich ist.

In Fig. 6 ist ein solcher Schaltvorgang dargestellt. Die Kurve 52 zeigt dabei einen Ausschnitt der Kurve 52 aus Fig. 5. Das Fahrzeug wird durch Verstellung des hydrostatischen Getriebes bis zum Zeitpunkt t₀ beschleunigt. Im Zeitpunkt t₀ wird der Schaltvorgang eingeleitet. Hierzu wird zunächst der Schwenkwinkel α des Hydromotors 6 auf einen von Null verschiedenen minimalen Schwenkwinkel αₘᵢₙ, der in Fig. 3 veranschaulicht ist, gestellt. Dies geschieht im Diagramm in der Zeit t₀ bis t₁. Die Zugkraft F folgt dabei dem Verlauf der durchgezogenen Linie 52'. Im Zeitpunkt t₁ ist die Abtriebswelle 7 des Hydromotors 6 drehmomentenfrei. Zwischen t₁ und t₂ erfolgt der Gangwechsel im Schaltgetriebe 8. Während dieser Zeit bleibt der Schwenkwinkel α des Hydromotors 6 weiterhin auf einem durch eine Begrenzung vorgegebenen minimalen Wert αₘᵢₙ mit vom Null-Schluckvolumen V₀ verschiedenen minimalen Schluckvolumen Vₘᵢₙ (siehe Fig. 3). Für ein Planetengetriebe 36 nach Fig. 4 erfolgt der mechanische Schaltvorgang durch Öffnen der ersten oder zweiten Lamellenkupplung 42 oder 47 und anschließendem Schließen der zweiten oder ersten Lamellenkupplung 47 oder 42. Beim Schließen der reibschlüssigen Lamellenkupplung 42 oder 47 wird die Abtriebswelle des Hydromotors 6 auf Drehzahl gebracht, bis sie eine im neuen Übersetzungsverhältnis angepaßte Drehzahl erreicht hat.

Im Zeitpunkt t₂ ist die erste Lamellenkupplung 42 vollkommen geschlossen. Der Eingriff in den Schwenkwinkel α des Hydromotors 6 wird beendet, so daß bis zum Zeitpunkt t₃ der Schwenkwinkel α wiederum durch den normalen Fahrbetrieb geregelt wird. Das Beenden des Eingriffs in den Schwenkwinkel α erfolgt kontrolliert über eine Rampe durch das elektronische Steuergerät 15, durch das die zweite Stelleinrichtung 13 angesteuert wird. Der auf der Rampe angefahrene Schwenkwinkel α wird dabei so eingestellt, daß das Gesamtübersetzungsverhältnis des hydrostatischen Getriebes 62 und des Schaltgetriebes 38 vor und nach dem Schaltvorgang identisch ist. Durch die Verwendung von unterschiedlichen Rampen kann sich beim Schaltvorgang auch der in Fig. 7 dargestellte Verlauf der Zugkraft F entsprechen den Kurven 52'' und 53'' ergeben.

Die Begrenzung des Schwenkwinkels α des Hydromotors kann beispielsweise durch einen in Fig. 3 angedeuteten mechanischen Anschlag 60 erfolgen. Ein solcher mechanischer Anschlag 60 kann in Form einer einstellbaren Schraube oder eines einstellbaren Bolzens ausgeführt sein. Damit läßt sich am fertigen Hydromotor 6 die Begrenzung des Schwenkwinkels α exakt so einjustieren, daß der Hydromotor 6 tatsächlich momentenfrei ist.

Anstelle der Schwenkwinkelbegrenzung durch einen mechanischen Anschlag 60 in dem Hydromotor 6 kann auch mittels eines in Fig. 1 dargestellten Sensors 61, der mit dem elektronischen Steuergerät verbunden ist, an der Abtriebswelle 7 das an der Abtriebswelle 7 anliegende Drehmoment erfaßt werden. Das dort gemessene Drehmoment wird durch das elektronische Steuergerät 15 ausgewertet und über die Verstellvorrichtung 13 der entsprechende minimale Schwenkwinkel αₘᵢₙ des Hydromotors 6 eingestellt.

Während des gesamten Schaltvorgangs bleibt das Stelldruckregelventil 26 der Hydropumpe 4 unverändert angesteuert. Eine kritische Erhöhung des Drucks in den Arbeitsleitungen 5a, 5b wird durch das Druckbegrenzungsventil 30 entsprechend den Ausführung zur Druckabschneidung 29, 30 vermieden. Der damit in der hochdruckseitigen Arbeitsleitung 5a bzw. 5b herrschende hohe Druck ermöglicht eine schnelle Verstellung des Schwenkwinkels α des Hydromotors 6. Damit kann während des Schaltvorgangs die hochdruckseitige Arbeitsleitung 5a bzw. 5b für den momentenfreien Hydromotor 6 als Konstantdruckquelle angesehen werden.

## Patentansprüche

1. Hydrostatischer Antrieb mit einem hydrostatischen Getriebe (62), dessen Übersetzungsverhältnis verstellbar ist und einem mit einer Abtriebswelle (7) des hydrostatischen Getriebes (62) verbundenen Schaltgetriebe (8; 36) mit wenigstens zwei Gängen, wobei das hydrostatische Getriebe (62) eine von einem Antriebsmotor angetriebene Hydropumpe (4) und einen mit der Hydropumpe über hydraulische Arbeitsleitungen (5a, 5b) verbundenen Hydromotor (6) umfasst und zumindest der Schwenkwinkel (α) des Hydromotors (6) durch eine Verstelleinrichtung (13) verstellbar ist,
**dadurch gekennzeichnet,**
**dass** für die Verstellung des Schwenkwinkels (α) des Hydromotors (6) in Richtung kleinen Schluckvolumens (V₀) eine Begrenzung vorgesehen ist, so dass bei dem so eingestellten Schwenkwinkel (αₘᵢₙ) das Schleppmoment des Hydromotors (6) gerade kompensiert wird und die Abtriebswelle (7) des Hydromotors (6) drehmomentenfrei ist.

2. Hydrostatischer Antrieb nach Anspruch 1,
**dadurch gekennzeichnet,**
**daß** die Begrenzung als einstellbarer mechanischer Anschlag (60) ausgebildet ist.

3. Hydrostatischer Antrieb nach Anspruch 1,
**dadurch gekennzeichnet,**
**daß** die Begrenzung des Schwenkwinkels (α) in Richtung kleinen Schluckvolumens (V₀) durch ein eine Verstelleinrichtung (13) des Hydromotors (6) ansteuerndes elektronische Steuergerät (15) vorgenommen wird.

4. Hydrostatischer Antrieb nach Anspruch 3,
**dadurch gekennzeichnet,**
**daß** an der Abtriebswelle (7) des hydrostatischen Getriebes ein Sensor (61) zum Erfassen eines Drehmoments angeordnet ist und der Sensor (61) mit dem Steuergerät (15) verbunden ist.

5. Hydrostatischer Antrieb nach Anspruch 1 bis 4,
**dadurch gekennzeichnet,**
**daß** das Schaltgetriebe (8, 36) als Planetengetriebe (36) ausgebildet ist.

6. Hydrostatischer Antrieb nach Anspruch 5,
**dadurch gekennzeichnet,**
**daß** in dem Schaltgetriebe (8, 36) zum Wechsel der Gänge reibschlüssige Kupplungen (42, 47) vorgesehen sind.

7. Hydrostatischer Antrieb nach einem der Ansprüche 1 bis 6,
**dadurch gekennzeichnet,**
**daß** eine Verstelleinrichtung (12) für die Hydropumpe (4) vorgesehen ist und diese Verstelleinrichtung (12) durch eine Druckabschneidung (29, 30) bei Überschreiten eines maximal zulässigen Drucks in einer Arbeitsleitung (5a, 5b) in Richtung kleinerer Fördermenge (V₀) verstellbar ist.

8. Hydrostatischer Antrieb nach einem der Ansprüche 1 bis 7,
**dadurch gekennzeichnet,**
**daß** die Druckabschneidung (29, 30) der Verstelleinrichtung (12) der Hydropumpe (4) den Druck in der Arbeitsleitung (5a, 5b) auf den maximal zulässigen Druck begrenzt, wenn die Abtriebswelle (7) des Hydromotors (6) drehmomentfrei ist.

9. Verfahren zur Wechseln von Gängen eines einem hydrostatischen Getriebe (62) nachgeschalteten Schaltgetriebes (8; 36), wobei das hydrostatische Getriebe (62) eine Hydropumpe (4) und einen in seinem Schwenkwinkel (α) verstellbaren, mit der Hydropumpe (4) über hydraulische Arbeitsleitungen (5a, 5b) verbundenen Hydromotor (6) umfaßt, **gekennzeichnet durch** folgende Verfahrensschritte:
- Erkennen eines Schaltkriteriums zum Wechseln des Gangs des Schaltgetriebes (8; 36) **durch** ein elektronisches Steuergerät (15);
- Verstellen des Schwenkwinkels (α) des Hydromotors (6) auf einen von Null verschiedenen minimalen Wert (αₘᵢₙ), so daß bei dem so eingestellten Schwenkwinkel (αₘᵢₙ) das Schleppmoment des Hydromotors (6) gerade kompensiert wird und eine mit dem Schaltgetriebe (8) verbundene Abtriebswelle (7) des Hydromotors (6) drehmomentenfrei ist;
- Wechseln des Gangs des Schaltgetriebes (8, 36);
- Angleichen der Drehzahl der Abtriebswelle (7) des Hydromotors (6) an das Übersetzungsverhältnis des neu eingelegten Gangs **durch** eine interne Synchronisation des Schaltgetriebes (8; 36); und
- Beenden des Eingriffs in den Schwenkwinkel (α) des Hydromotors (6).

10. Verfahren nach Anspruch 9,
**dadurch gekennzeichnet,**
**daß** der minimale Schwenkwinkel (αₘᵢₙ) des Hydromotors (6) durch einen mechanischen Anschlag (60) eingestellt wird.

11. Verfahren nach Anspruch 9,
**dadurch gekennzeichnet,**
**daß** der minimale Schwenkwinkel (αₘᵢₙ) durch Erfassen des an der Abtriebswelle (7) vorliegenden Drehmoments durch das Steuergerät (15) mittels eines an der Abtriebswelle (7) des Hydromotors (6) vorgesehenen Sensor (61) zum Erfassen des Drehmoments eingestellt wird.

12. Verfahren nach einem der Ansprüche 9 bis 11,
**dadurch gekennzeichnet,**
**daß** der Wechsel des Gangs des Schaltgetriebes (8; 36) durch Öffnen und Schließen von reibschlüssigen Kupplungen (42, 47) erfolgt.

13. Verfahren nach einem der Ansprüche 9 bis 12,
**dadurch gekennzeichnet,**
**daß** die Hydropumpe (4) im Regelbereich einer Druckabschneidung (29, 30) betrieben wird.

14. Verfahren nach einem der Ansprüche 9 bis 12,
**dadurch gekennzeichnet,**
**daß** der Schwenkwinkel (α) des Hydromotors (6) anschließend zunächst so eingestellt wird, daß das sich aus dem Übersetzungsverhältnis des hydrostatischen Getriebes (62) und des Schaltgetriebes (8, 36) zusammensetzende effektive Übersetzungsverhältnis so groß wie vor dem Gangwechsel ist.

## Claims

1. Hydrostatic drive comprising a hydrostatic transmission (62), the transmission ratio of which is adjustable, and a shift transmission (8; 36), which is connected to an output shaft (7) of the hydrostatic transmission (62) and has at least two gears, wherein the hydrostatic transmission (62) comprises a hydraulic pump (4), which is driven by a drive motor, and a hydraulic motor (6) connected to the hydraulic pump by hydraulic working lines (5a, 5b) and at least the swivel angle (α) of the hydraulic motor (6) is adjustable by means of an adjustment device (13),
**characterized in**
**that** for adjustment of the swivel angle (α) of the hydraulic motor (6) in the direction of a small displacement capacity (V₀) a limitation is provided so that, given the swivel angle (αₘᵢₙ) thus adjusted, the drag torque of the hydraulic motor (6) is just compensated and the output shaft (7) of the hydraulic motor (6) is torque-free.

2. Hydrostatic drive according to claim 1,
**characterized in**
**that** the limitation takes the form of an adjustable mechanical stop (60).

3. Hydrostatic drive according to claim 1,
**characterized in**
**that** the limitation of the swivel angle (α) in the direction of a small displacement capacity (V₀) is carried out by means of an electronic control unit (15) that controls an adjustment device (13) of the hydraulic motor (6).

4. Hydrostatic drive according to claim 3,
**characterized in**
**that** disposed on the output shaft (7) of the hydrostatic transmission is a sensor (61) for detecting a torque and the sensor (61) is connected to the control unit (15).

5. Hydrostatic drive according to claim 1 to 4,
**characterized in**
**that** the shift transmission (8, 36) takes the form of an epicyclic gearbox (36).

6. Hydrostatic drive according to claim 5,
**characterized in**
**that** friction clutches (42, 47) are provided in the shift transmission (8, 36) for changing the gears.

7. Hydrostatic drive according to one of claims 1 to 6,
**characterized in**
**that** an adjustment device (12) is provided for the hydraulic pump (4) and this adjustment device (12) is adjustable in the direction of a lower delivery rate (V₀) by means of a pressure cut-off device (29, 30) if a maximum permissible pressure is exceeded in a working line (5a, 5b).

8. Hydrostatic drive according to one of claims 1 to 7,
**characterized in**
**that** the pressure cut-off device (29, 30) of the adjustment device (12) of the hydraulic pump (4) limits the pressure in the working line (5a, 5b) to the maximum permissible pressure when the output shaft (7) of the hydraulic motor (6) is torque-free.

9. Method of changing gears of a shift transmission (8; 36) connected downstream of a hydrostatic transmission (62), wherein the hydrostatic transmission (62) comprises a hydraulic pump (4) and a hydraulic motor (6), which has an adjustable swivel angle (α) and is connected to the hydraulic pump (4) by hydraulic working lines (5a, 5b),
**characterized by** the following method steps:
- identify a shift criterion for changing the gear of the shift transmission (8; 36) by means of an electronic control unit (15);
- adjust the swivel angle (α) of the hydraulic motor (6) to a minimum value (αₘᵢₙ) differing from zero so that, given the swivel angle (αₘᵢₙ) thus adjusted, the drag torque of the hydraulic motor (6) is just compensated and an output shaft (7) of the hydraulic motor (6) that is connected to the shift transmission (8) is torque-free;
- change the gear of the shift transmission (8; 36);
- adjust the rotational speed of the output shaft (7) of the hydraulic motor (6) to the transmission ratio of the newly engaged gear by means of an internal synchronization of the shift transmission (8; 36); and
- terminate the intervention in the swivel angle (α) of the hydraulic motor (6).

10. Method according to claim 9,
**characterized in**
**that** the minimum swivel angle (αₘᵢₙ) of the hydraulic motor (6) is set by means of a mechanical stop (60).

11. Method according to claim 9,
**characterized in**
**that** the minimum swivel angle (αₘᵢₙ) is set by detection of the torque present at the output shaft (7) by the control unit (15) by means of a sensor (61) for detecting the torque that is provided on the output shaft (7) of the hydraulic motor (6).

12. Method according to one of claims 9 to 11,
**characterized in**
**that** the changing of the gear of the shift transmission (8; 36) is effected by opening and closing friction clutches (42, 47).

13. Method according to one of claims 9 to 12,
**characterized in**
**that** the hydraulic pump (4) is operated within the control range of a pressure cut-off device (29, 30).

14. Method according to one of claims 9 to 12,
**characterized in**
**that** the swivel angle (α) of the hydraulic motor (6) is then set initially in such a way that the effective transmission ratio, which is composed of the transmission ratios of the hydrostatic transmission (62) and of the shift transmission (8, 36), is as great as before the gear change.

## Revendications

1. Entraînement hydrostatique comportant une transmission hydrostatique (62) dont le rapport de transmission est réglable et comportant une boîte de vitesses (8 ; 36) avec au moins deux vitesses, reliée à un arbre de sortie de la transmission hydrostatique (62), la transmission hydrostatique (62) comprenant une pompe hydraulique (4) entraînée par un moteur de trainée et un moteur hydraulique (6) relié à la pompe hydraulique via des conduites de travail (5a, 5b) hydrauliques, et au moins l'angle de pivotement (α) du moteur hydraulique (6) pouvant être réglé par un dispositif de réglage (13),
**caractérisé en ce que**
une limitation est prévue pour le réglage de l'angle de pivotement (α) du moteur hydraulique (6) en direction d'un petit volume d'absorption (V₀), de telle sorte que dans le cas de l'angle de pivotement (αₘᵢₙ) ainsi réglé, le couple de trainée du moteur hydraulique (6) est exactement compensé et l'arbre de sortie (7) du moteur hydraulique (6) est libre de couple de rotation.

2. Entraînement hydrostatique selon la revendication 1,
**caractérisé en ce que**
la limitation est réalisée sous forme de butée mécanique (60) réglable.

3. Entraînement hydrostatique selon la revendication 1,
**caractérisé en ce que**
la limitation de l'angle de pivotement (α) en direction d'un petit volume d'absorption (V₀) est effectuée par un appareil de commande (15) électronique pilotant un dispositif de réglage (13) du moteur hydraulique (6).

4. Entraînement hydrostatique selon la revendication 3,
**caractérisé en ce que**
sur l'arbre de sortie (7) de la transmission hydrostatique est agencé un capteur (61) pour détecter un couple de rotation, et le capteur (61) est relié à l'appareil de commande (15).

5. Entraînement hydrostatique selon la revendication 1 à 4,
**caractérisé en ce que**
la boîte de vitesses (8, 36) est réalisée sous forme de mécanisme à engrenages planétaires (36).

6. Entraînement hydrostatique selon la revendication 5,
**caractérisé en ce que**
dans la boîte de vitesses (8, 36) sont prévus des embrayages (42, 47) à friction pour changer les vitesses.

7. Entraînement hydrostatique selon l'une des revendications 1 à 6,
**caractérisé en ce que**
il est prévu un dispositif de réglage (12) pour la pompe hydraulique (4) et ce dispositif de réglage (12) est réglable par un coupe-pression (29, 30) en cas de dépassement d'une pression maximale admissible dans une conduite de travail (5a, 5b) en direction d'un plus petit débit de refoulement (V₀).

8. Entraînement hydrostatique selon l'une des revendications 1 à 7,
**caractérisé en ce que**
le coupe-pression (29, 30) du dispositif de réglage (12) de la pompe hydraulique (4) limite la pression dans la conduite de travail (5a, 5b) à la pression maximale admissible lorsque l'arbre de sortie (7) du moteur hydraulique (6) est libre de couple de rotation.

9. Procédé pour changer des vitesses d'une boîte de vitesses (8 ; 36) montée en aval d'une transmission hydrostatique (62), la transmission hydrostatique (62) comprenant une pompe hydraulique (4) et un moteur hydraulique (6) réglable dans son angle de pivotement (α) et relié à la pompe hydraulique (4) via des conduites de travail (5a, 5b) hydrauliques, **caractérisé par** les étapes de procédé suivantes :
- reconnaissance d'un critère de passage pour changer la vitesse de la boîte de vitesses (8 ; 36) au moyen d'un appareil de commande (15) électronique ;
- réglage de l'angle de pivotement (α) du moteur hydraulique (6) à une valeur minimum (αₘᵢₙ) différente de zéro, de telle sorte que dans le cas de l'angle de pivotement (αₘᵢₙ) ainsi réglé, le couple de trainée du moteur hydraulique (6) est exactement compensé et qu'un arbre de sortie (7) du moteur hydraulique (6), qui est relié à la boîte de vitesses (8), est libre de couple de rotation ;
- changement de la vitesse de la boîte de vitesses (8, 36) ;
- adaptation de la vitesse de rotation de l'arbre de sortie (7) du moteur hydraulique (6) au rapport de transmission de la vitesse nouvellement engagée, par une synchronisation interne de la boîte de vitesses (8 ; 36), et
- achèvement de l'intervention dans l'angle de pivotement (α) du moteur hydraulique (6).

10. Procédé selon la revendication 9,
**caractérisé en ce que**
l'angle de pivotement minimum (αₘᵢₙ) du moteur hydraulique (6) est réglé par une butée mécanique (60).

11. Procédé selon la revendication 9,
**caractérisé en ce que**
l'angle de pivotement minimum (αₘᵢₙ) est réglé par la détection du couple de rotation en présence sur l'arbre de sortie (7) par l'appareil de commande (15) au moyen d'un capteur (61) prévu sur l'arbre de sortie (7) du moteur hydraulique (6) pour détecter le couple de rotation.

12. Procédé selon l'une des revendications 9 à 11,
**caractérisé en ce que**
le changement de vitesse de la boîte de vitesses (8 ; 36) a lieu en ouvrant et fermant des embrayages (42, 47) à friction.

13. Procédé selon l'une des revendications 9 à 12,
**caractérisé en ce que**
la pompe hydraulique (4) fonctionne dans la plage de réglage d'une coupure de pression (29, 30).

14. Procédé selon l'une des revendications 9 à 12,
**caractérisé en ce que**
l'angle de pivotement (α) du moteur hydraulique (6) est ensuite tout d'abord réglé de telle sorte que le rapport de transmission effectif composé par le rapport de transmission de la transmission hydrostatique (62) et de la boîte de vitesses (8 ; 36) est aussi grand qu'avant le changement de vitesse.
